# EUROPEAN PATENT APPLICATION

(11) **EP 4 697 820 A1**
(43) Date of publication of application: **18.02.2026**
(21) Application number: 25742813.6
(22) Date of filing: 17.06.2025
(51) Int. Cl.: H04W 52/02, H04W 24/08, H04B 7/06, H04W 76/27, H04W 84/12

(54) **ELECTRONIC DEVICE FOR RECEIVING CHANNEL STATE INFORMATION IDENTIFIED ON BASIS OF SIGNAL TRANSMITTED BY EXTERNAL ELECTRONIC DEVICE, AND OPERATION METHOD OF ELECTRONIC DEVICE**

(30) Priority: 21.06.2024 KR 20240081403; 26.07.2024 KR 20240099247
(71) Applicant: Samsung Electronics Co., Ltd, Suwon-si, Gyeonggi-do 16677 (KR)
(72) Inventor: CHOU, Junsu, Suwon-si, Gyeonggi-do 16677 (KR)
(74) Representative: Walaski, Jan Filip
(86) International application number: PCT/KR2025/008328
(87) International publication number: WO 2025/263947

(57) **Abstract**

In an electronic device and an operation method thereof according to an embodiment, the electronic device may include a communication circuit configured to perform short-range wireless communication, a memory, and at least one processor, wherein the memory stores instructions that, when executed by the at least one processor, cause the first electronic device to transmit, to a second electronic device connected to the first electronic device, a first message including identification information of a third electronic device connected to the second electronic device, a condition associated with channel state information (CSI) measured based on a signal transmitted by the third electronic device to the second electronic device, and/or a value associated with the condition, the first message requesting the second electronic device to perform determining whether the signal satisfies a condition, receive, from the second electronic device, a second message including information indicating that the signal satisfies the condition associated with the channel state information, and on receiving the second message, activate and/or perform a service using the first electronic device and the third electronic device.

## Description

### [Technical Field]

The disclosure relates to an electronic device and an operation method thereof and, more particularly, to an electronic device for receiving channel state information identified based on a signal transmitted by an external electronic device.

### [Background Art]

With the widespread use of various electronic devices, improvements in the speed of wireless communication available to various electronic devices have been realized. Among wireless communication standards supported by recent electronic devices, IEEE 802.11 WLAN (or Wi-Fi) refers to a standard for implementing highspeed wireless connection between various electronic devices. When initially implemented, Wi-Fi was able to support a maximum transmission speed of 1 to 9 Mbps, but Wi-Fi 6 technology (or IEEE 802.11ax) is able to support a maximum transmission speed of about 10 Gbps.

Through short-range wireless communication that supports a high transmission speed, an electronic device may support various services that use a relatively large amount of data (for example, a UHD-quality video streaming service, an augmented reality (AR) service, a virtual reality (VR) service, and/or a mixed reality (MR) service), as well as various other services.

The electronic device may provide services associated with an external electronic device connected via short-range wireless communication. For example, services associated with an external electronic device may include a service for displaying a screen, which is displayed on a display of an electronic device, on a display of an external electronic device (e.g., a screen mirroring service), a service for splitting and displaying content on the display of the electronic device and the display of the external electronic device (e.g., a screen sharing service), and a service for controlling an electronic device by using a user input to an external electronic device.

### [Disclosure of Invention]

### [Technical Problem]

The electronic device may require location information of an external electronic device to provide services associated with the external electronic device. In order to obtain information related to the location of the external electronic device, the electronic device may identify the characteristics of a signal transmitted by the external electronic device to the electronic device and obtain information related to the location of the external electronic device, based on the characteristics of the signal. Among the characteristics of the signal, channel state information may include the strength and/or phase of a signal exchanged between electronic devices and external electronic devices. The channel state information may be dependent on the physical environment between a device that has transmitted a signal and a device that has received a signal, and may have unique values depending on the location. The electronic device may acquire the exact location of the external electronic device based on the channel state information.

However, the operation of the electronic device continuously identifying the channel state information, based on the signal transmitted by the external electronic device may increase the power consumption of the electronic device. In particular, when a latency-sensitive service is performed, the number of times the channel state information is identified may increase, which may further increase the power consumption.

When the power consumption of the electronic device increases, the time during which services can be executed may decrease, and the quality of the service may decrease.

The technical tasks to be accomplished in this document are not limited to the technical tasks mentioned above, and other technical tasks not mentioned will be clearly understood by a person skilled in the art in the technical field to which the disclosure belongs from the following description.

### [Solution to Problem]

A first electronic device according to an embodiment may include a communication circuit configured to perform short-range wireless communication. The first electronic device may include a memory. The first electronic device may include at least one processor. The memory may store instructions that, when executed by the at least one processor, cause the first electronic device to transmit, to a second electronic device connected to the first electronic device, a first message including identification information of a third electronic device connected to the second electronic device, a condition associated with channel state information (CSI) measured based on a signal transmitted by the third electronic device to the second electronic device, and/or a value associated with the condition, the first message requesting the second electronic device to perform determining whether the signal satisfies a condition. The memory may store instructions for receiving, from the second electronic device, a second message including information indicating that the signal satisfies the condition associated with the channel state information. The memory may store instructions for, on receiving the second message, activating and/or performing a service using the first electronic device and the third electronic device.

A second electronic device according to an embodiment may include a communication circuit configured to perform short-range wireless communication. The second electronic device may include a memory. The second electronic device may include at least one processor. The memory may store instructions that, when executed by the at least one processor, cause the second electronic device to receive, from a first electronic device to which the second electronic device is connected, a first message including identification information of a third electronic device connected to the second electronic device, a condition associated with channel state information (CSI) measured based on a signal transmitted by the third electronic device to the second electronic device, and/or a value associated with the condition, the first message requesting the second electronic device to determine whether the signal satisfies a condition. The memory may store instructions for, in the case that the channel state information measured based on the signal received from the third electronic device satisfies the condition, transmitting, to the first electronic device, a second message including information indicating that the condition associated with the channel state information is satisfied.

An operation method of a first electronic device according to an embodiment may include transmitting, to a second electronic device connected to the first electronic device, a first message including identification information of a third electronic device connected to the second electronic device, a condition associated with channel state information (CSI) measured based on a signal transmitted by the third electronic device to the second electronic device, and/or a value associated with the condition, the first message requesting the second electronic device to perform determining whether the signal satisfies a condition. The operation method of the first electronic device may include receiving, from the second electronic device, a second message including information indicating that the condition associated with the channel state information is satisfied. The operation method of the first electronic device may include, on receiving the second message, activating and/or performing a service using the first electronic device and the third electronic device.

### [Advantageous Effects of invention]

An electronic device and an operation method thereof according to an embodiment may cause a second electronic device, rather than a first electronic device, to perform an operation of identifying channel state information, based on a signal transmitted by a third electronic device. The first electronic device may receive, from the second electronic device, information indicating that the channel state information identified based on the signal transmitted by the third electronic device satisfies a designated condition, and may activate and/or perform a service using the first electronic device and the third electronic device. The first electronic device may reduce power consumption of the first electronic device by not performing an operation of identifying the channel state information.

The effects that can be obtained from the disclosure are not limited to those mentioned above, and other effects not mentioned will be apparent to a person skilled in the art to which the disclosure belongs from the following description.

### [Brief Description of Drawings]

FIG. 1 is a block diagram of an electronic device.
FIG. 2 illustrates a short-range wireless communication system.
FIG. 3 is a block diagram of a first electronic device.
FIG. 4 is a block diagram of a second electronic device.
FIG. 5 illustrates an example in which a first electronic device receives, from a second electronic device, a second message including information indicating that channel state information measured using a signal transmitted by a third electronic device to the second electronic device satisfies a designated condition.
FIG. 6 illustrates the format of a first message and a second message.
FIG. 7 illustrates an example in which a first electronic device requests a second electronic device to perform an operation of determining whether channel state information measured using a signal transmitted by a third electronic device to the second electronic device satisfies a designated condition.
FIG. 8 illustrates an example in which a first electronic device activates and/or performs a service using a third electronic device;
FIG. 9 illustrates an example in which a first electronic device activates and/or performs a service using a third electronic device.
FIG. 10 illustrates an example in which a fourth electronic device performs an operation of determining whether channel state information measured using a signal transmitted by the third electronic device to the second electronic device satisfies a designated condition.
FIG. 11 is an operational flowchart illustrating an operation method of a first electronic device.

### [Mode for the Invention]

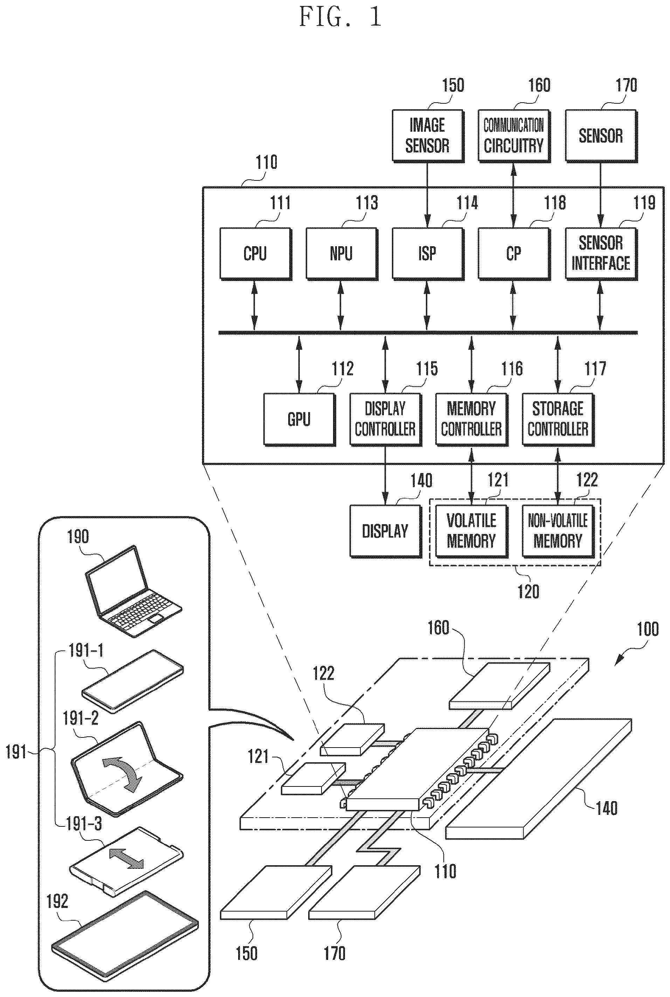

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

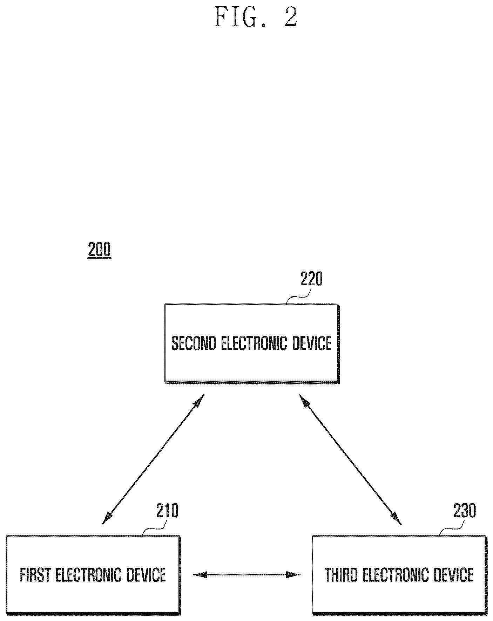

FIG. 2 illustrates a short-range wireless communication system according to an embodiment.

Referring to FIG. 2, a short-range wireless communication system 200 may include a first electronic device 210 (e.g., the electronic device 100 of FIG. 1), a second electronic device 220 (e.g., the electronic device 100 of FIG. 1), and/or a third electronic device 230 (e.g., the electronic device 100 of FIG. 1).

The first electronic device 210 may perform wireless communication with a second electronic device 220 and/or a third electronic device 230 included in the short-range wireless communication system 200 via short-range wireless communication. Alternatively, the first electronic device 210 may perform wireless communication with other external electronic devices not included in the short-range wireless communication system 200 via the short-range wireless communication. Short-range wireless communication may refer to various communication methods that the first electronic device 210, the second electronic device 220, and/or the third electronic device 230 can support. For example, the short-range wireless communication may be Wi-Fi, which is a short-range wireless communication as defined by IEEE 802.11.

According to an example, at least one of the first electronic device 210, the second electronic device 220, and/or the third electronic device 230 included in the short-range wireless communication system 200 may perform the role of an access point (AP) as defined by IEEE 802.11. The disclosure assumes and describes that the second electronic device 220 performs the role of the AP. The first electronic device 210 and/or the third electronic device 230 may perform wireless communication via the short-range wireless communication provided by the second electronic device 220. The first electronic device 210 and/or the third electronic device 230 may perform the role of a station as defined in IEEE 802.11.

The first electronic device 210 and/or the third electronic device 230 may perform a service. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

In order to perform the service, the first electronic device 210 and/or the third electronic device 230 may require information related to the location of the counterpart electronic device. According to an example, the first electronic device 210 may measure a distance between the third electronic device 230 and the first electronic device 210 and, when the distance is equal to or less than a designated value, may activate and/or perform the service. According to another example, the first electronic device 210 may activate and/or perform the service in response to identifying that the third electronic device 230 exists at a particular location.

In connection with obtaining information related to the location of the third electronic device 230, the first electronic device 210 may identify characteristics of a signal transmitted by the third electronic device 230 to the first electronic device 210 and obtain information related to the location of the third electronic device 230 based on the characteristics of the signal. The characteristics of the signal may include channel state information of the signal. The channel state information may refer to state information about a channel established (or generated) between the first electronic device 210 and the third electronic device 230. According to an example, the channel state information may include a signal strength (or normalized strength) and/or a phase of the signal. The channel state information may be dependent on the physical environment between the location of the electronic device (e.g., the third electronic device 230) that has transmitted the signal and the location of the electronic device (e.g., the first electronic device 210) that has received the signal. According to an example, the channel state information may have different values as the location of the third electronic device 230 changes. Accordingly, the first electronic device 210 may identify (or determine) the location of the third electronic device 230 (or a relative location between the third electronic device 230 and the first electronic device 210), based on the channel state information measured (or determined, identified) based on signals transmitted by the third electronic device 230 to the first electronic device 210. According to an example, the first electronic device 210 may perform machine learning for the operation of identifying (or determining) the location of the third electronic device 230 (or a relative location between the third electronic device 230 and the first electronic device 210), based on channel state information measured (or determined, identified) based on signals transmitted by the third electronic device 230 to the first electronic device 210, and may accurately estimate the location of the third electronic device 230, based on data obtained as a result of the machine learning. The first electronic device 210 may activate and/or perform a service, based on the location of the third electronic device 230 (or a relative location between the third electronic device 230 and the first electronic device 210).

However, the operation of the first electronic device 210 continuously identifying the channel state information based on the signals transmitted by the third electronic device 230 may increase the power consumption (or battery consumption) of the first electronic device 210, resulting in increased heat generation. According to an example, the first electronic device 210 may perform the operation of receiving a signal transmitted by the third electronic device 230 and identifying the channel state information at a designated period to determine a location of the third electronic device 230 (or a relative location between the first electronic device 210 and the third electronic device 230). When the service performed by the first electronic device 210 and the third electronic device 230 is a latency-sensitive service, the designated period may be relatively short, and as the designated period becomes relatively short, the power consumption (or battery consumption) of the first electronic device 210 may increase.

When the power consumption of the first electronic device 210 increases, the time available to perform the service performed by the first electronic device 210 may decrease, and the quality of the service may decrease.

The following describes examples of reducing power consumption (or battery consumption) of the first electronic device 210 by allowing an electronic device (e.g., the second electronic device 220) other than the first electronic device 210 to identify channel state information of a signal transmitted by the third electronic device 230 and identifying whether the channel state information satisfies a designated condition.

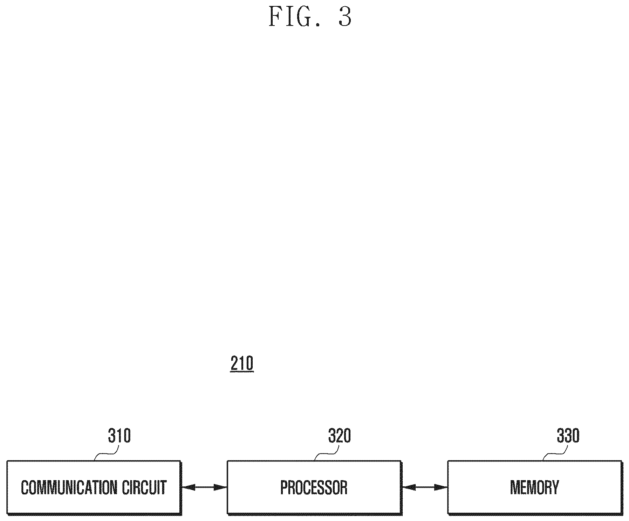

FIG. 3 is a block diagram of a first electronic device according to an embodiment.

The first electronic device (e.g., the first electronic device 210 of FIG. 2) may include a communication circuit 310 (e.g., the communication circuit 160 of FIG. 1), a processor 320 (e.g., the processor 110 of FIG. 1), and/or a memory 330 (e.g., the memory 120 of FIG. 1).

The communication circuit 310 may be a communication circuit that supports short-range wireless communication. The short-range wireless communication may be Wi-Fi, which is a short-range wireless communication as defined by IEEE 802.11.

The communication circuit 310 may include various circuit structures used to modulate and/or demodulate signals within the first electronic device 210. For example, the communication circuit 310 may modulate a baseband signal to a signal in a radio frequency (RF) band for output through an antenna (not shown), or demodulate a signal in the RF band received through the antenna to a signal in the baseband for transmission to the processor 320.

The processor 320 may perform an operation of receiving data transmitted by the application processor (e.g., the processor 110 of FIG. 1) and generating packets for transmitting the received data. The processor 320 may be defined as a communication processor included in the communication circuit 160 or a processing circuit included in a communication circuit that performs short-range wireless communication. According to an example, when the processor 320 is included in the communication circuit 310 performing the short-range wireless communication, the processor 320 may be referred to as a core. The processor 320 may be electrically or operatively connected to the communication circuit 310, and may control the communication circuit 310.

The memory 330 may store instructions that may be executed by the processor 320. The operations of the processor 320 described below may be performed in accordance with the execution of instructions stored in the memory 330.

The processor 320 may control the communication circuit 310 to perform data transmission and/or reception via short-range wireless communication. According to an example, the first electronic device 210 may perform the role of an STA of a short-range wireless communication system (e.g., the short-range wireless communication system 200 of FIG. 2), and the second electronic device (e.g., the second electronic device 220 of FIG. 2) may perform the role of an AP of the short-range wireless communication system 200. The processor 320 may control the communication circuit 310 to perform data transmission and/or reception via short-range wireless communication provided by the second electronic device 220. According to an example, the processor 320 may perform, via short-range wireless communication, data transmission and/or reception to and/or from an entity existing outside of the short-range wireless communication system 200, data may be transmitted to the entity existing outside of the short-range wireless communication system 200 via the second electronic device 220, and data transmitted by the entity existing outside of the short-range wireless communication system 200 may be transmitted to the first electronic device 210 via the second electronic device 220.

According to an example, the processor 320 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, the processor 320 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, prior to activating a service using the third electronic device 230. Alternatively, the processor 320 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, during performing of the service using the third electronic device 230.

The processor 320 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition. The signal transmitted by the third electronic device 230 may be a signal transmitted to an electronic device connected to the third electronic device 230. According to an example, the signal transmitted by the third electronic device 230 may be a signal transmitted to the second electronic device 220.

According to an example, the identification information of the third electronic device 230 may include various information that can distinguish the third electronic device 230 from other electronic devices (e.g., the first electronic device 210, the second electronic device 220). For example, the identification information of the third electronic device 230 may include any one of a medium access control (MAC) address of the third electronic device 230, an IP address of the third electronic device 230, or an international mobile equipment identity (IMEI) of the third electronic device 230.

According to an example, a condition associated with a channel state may refer to a condition associated with channel state information of a signal transmitted (or broadcast) by the third electronic device 230. The third electronic device 230 may transmit a signal including data to the second electronic device 220 to perform a short-range wireless communication, and the second electronic device 220 may receive the signal transmitted by the third electronic device 230 and identify (or determine, measure, obtain) channel state information (CSI) of the signal. The second electronic device 220 may identify whether the identified (or determined, measured, obtained) channel state information satisfies a condition associated with the channel state.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

According to an example, a condition associated with a channel state may include a condition in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 that differs by a designated degree or more from a specific value (e.g., the channel state information identified (or determined, measured, obtained) by the second electronic device 220, based on the signal transmitted by the first electronic device 210 to the second electronic device 220) may refer to signals that differ in phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are not in proximity to each other.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

According to an example, a value associated with a condition may include a value used by the second electronic device 220 to determine whether the condition is satisfied, and may include a value used for comparison with channel state information of a signal transmitted (or broadcast) by the third electronic device 230, the channel state information being measured by the second electronic device 220. According to an example, based on the channel state information of the signal transmitted (or broadcast) by the third electronic device 230 and/or the value associated with the condition included in the first message, the second electronic device 220 may determine (or identify) whether the channel state information of the signal transmitted (or broadcast) by the third electronic device 230 satisfies the condition associated with the channel state information included in the first message.

According to an example, the value associated with the condition may include channel state information of a signal transmitted by the first electronic device 210 to the second electronic device 220. The first electronic device 210 may identify (or determine, obtain) the channel state information of the signal transmitted by the second electronic device 220 to the first electronic device 210, and may determine the channel state information of the signal transmitted by the first electronic device 210 to the second electronic device 220, based on the channel state information of the signal transmitted by the second electronic device 220 to the first electronic device 210. The modulation of the signal via the short-range wireless communication may use a frequency divisional duplexing (FDD) scheme and may have a reciprocal feature. Accordingly, the channel state information of the signal transmitted by the first electronic device 210 to the second electronic device 220 may be substantially the same as the channel state information of the signal transmitted by the second electronic device 220 to the first electronic device 210.

According to an example, the second electronic device 220 may receive the first message and determine whether to perform an operation of determining whether the channel state information measured based on the signal transmitted by the third electronic device 230 satisfies a condition included in the first message. In the case that the second electronic device 220 determines to perform the operation of determining whether the channel state information measured based on the signal transmitted by the third electronic device 230 satisfies the condition included in the first message, the second electronic device 220 may transmit, to the first electronic device 210, a response message indicating that the operation of determining whether the channel state information measured based on the signal transmitted by the third electronic device 230 satisfies the condition included in the first message has been performed.

According to an example, the processor 320 may receive a response message indicating that the second electronic device 220 has performed an operation of determining whether the channel state information measured based on the signal transmitted by the third electronic device 230 satisfies a condition included in the first message. In response to receiving the response message, the processor 320 may control the communication circuit 310 to prevent (or interrupt) the operation of identifying (or determining, obtaining, measuring) the channel state information based on the signal transmitted (or broadcast) by the third electronic device 230. By preventing (or interrupting) the communication circuit 310 from performing the operation of identifying (or determining, obtaining, measuring) the channel state information based on the signal transmitted (or broadcast) by the third electronic device 230, the first electronic device 310 may reduce power consumption (or battery consumption) caused by the operation of identifying (or determining, obtaining, measuring) the channel state information based on the signal transmitted (or broadcast) by the third electronic device 230.

After the first message is transmitted to the second electronic device 220 (or after a response message corresponding to the first message is received from the second electronic device 220), the processor 320 may switch the communication circuit 310 to an idle or inactive state.

Alternatively, after the first message is transmitted to the second electronic device 220 (or after a response message corresponding to the first message is received from the second electronic device 220), the processor 320 may switch the communication circuit 310 to an idle or inactive state during a designated time period.

The switching of the communication circuit 310 to an idle or inactive state may be implemented in various ways. According to an example, the processor 310 may switch the communication circuit 310 to an idle or inactive state by controlling the communication circuit 310 to enter a power saving mode. According to another example, when the communication circuit 310 supports a target wake time (TWT), the processor 320 may switch the communication circuit 310 to the idle or inactive state by configuring a parameter associated with a time at which the communication circuit 310 is to be inactive (or a time at which the communication circuit 310 is to be active) and transmitting the parameter to the second electronic device 220.

The processor 320 may receive, from the second electronic device 220, a second message including information indicating that the channel state information of the signal transmitted by the third electronic device 230 satisfies the condition (included in the first message), the channel state information being measured by the second electronic device 220. The processor 320 may receive the second message from the second electronic device 220 in a state in which the communication circuit 310 is switched back to the active state.

In response to receiving the second message (or upon receiving the second message), the processor 320 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the second electronic device 220. The processor 320 may activate and/or perform services based on the channel state information included in the second message.

According to an example, the processor 320 may control the communication circuit 310 to transmit a third message requesting termination of the determination by the second electronic device 220 of whether the channel state information of the signal transmitted (or broadcast) by the third electronic device 230 satisfies a condition.

According to an example, when the service using the first electronic device 210 and/or the third electronic device 230 is terminated (or interrupted) and/or is inactive, the processor 320 may control the communication circuit 310 to transmit a third message requesting termination of the determination by the second electronic device 220 of whether the channel state information of the signal transmitted (or broadcast) by the third electronic device 230 satisfies a condition.

According to an example, based on identifying that the service using the first electronic device 210 and/or the third electronic device 230 is a designated service, the processor 320 may control the communication circuit 310 to transmit a third message requesting termination of the determination by the second electronic device 220 of whether the channel state information of the signal transmitted (or broadcast) by the third electronic device 230 satisfies a condition.

According to an example, a designated service may include a service that requires low latency. For example, the designated service may include a screen sharing service. When the first electronic device 210 and/or the third electronic device 230 are performing a service that requires low latency, the communication circuit 310 of the first electronic device 210 may be in a state that is difficult to switch to an inactive state (or an idle state), and the processor 210 may identify channel state information based on signals (which may include information related to the service) transmitted (or broadcast) by the third electronic device 230. Accordingly, the processor 320 may control the communication circuit 310 to transmit a third message to the second electronic device 220 requesting that the second electronic device 220 terminate the operation of determining whether the channel state information of the signal transmitted (or broadcast) by the third electronic device 230 satisfies a condition.

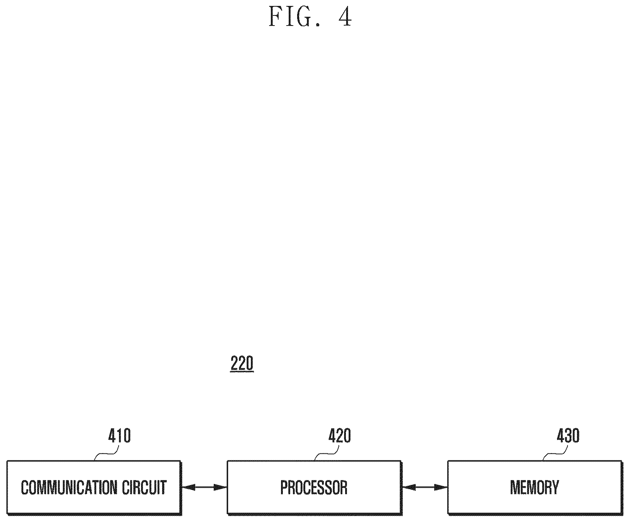

FIG. 4 is a block diagram of a second electronic device according to an embodiment.

The second electronic device (e.g., the second electronic device 220 of FIG. 2) may include a communication circuit 410 (e.g., the communication circuit 160 of FIG. 1), a processor 420 (e.g., the processor 110 of FIG. 1), and/or a memory 430 (e.g., the memory 120 of FIG. 1).

The communication circuit 410 may be a communication circuit that supports short-range wireless communication. The short-range wireless communication may be Wi-Fi, which is a short-range wireless communication as defined by IEEE 802.11.

The communication circuit 410 may include various circuit structures used for modulation and/or demodulation of signals within the second electronic device 220. For example, the communication circuit 410 may modulate a baseband signal to a signal in a radio frequency (RF) band for output through an antenna (not shown), or demodulate a signal in the RF band received through the antenna to a signal in the baseband for transmission to the processor 420.

The processor 420 may perform an operation of receiving data transmitted by the application processor (e.g., the processor 110 of FIG. 1) and generating packets for transmitting the received data. The processor 420 may be defined as a communication processor included in the communication circuit 410 or a processing circuit included in a communication circuit that performs short-range wireless communication. According to an example, when the processor 420 is included in the communication circuit 410 performing the short-range wireless communication, the processor 420 may be referred to as a core. The processor 420 may be electrically or operatively connected to the communication circuit 410, and may control the communication circuit 410.

The memory 430 may store instructions that may be executed by the processor 420. The operations of the processor 420 described below may be performed in accordance with the execution of instructions stored in the memory 430.

The processor 420 may control the communication circuit 410 to perform data transmission and/or reception via short-range wireless communication. According to an example, the first electronic device 210 may perform the role of an STA of a short-range wireless communication system (e.g., the short-range wireless communication system 200 of FIG. 2), and the second electronic device (e.g., the second electronic device 220 of FIG. 2) may perform the role of an AP of the short-range wireless communication system 200. The processor 420 may control the communication circuit 410 to perform data transmission and/or reception via short-range wireless communication provided by the second electronic device 220. According to an example, the processor 420 may perform, via short-range wireless communication, data transmission and/or reception to and/or from an entity existing outside of the short-range wireless communication system 200, data may be transmitted to the entity existing outside of the short-range wireless communication system 200 via the second electronic device 220, and data transmitted by the entity existing outside of the short-range wireless communication system 200 may be transmitted to the first electronic device 210 via the second electronic device 220.

The processor 420 may receive a first message from the first electronic device 210, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

According to an example, the identification information of the third electronic device 230 may include various information that can distinguish the third electronic device 230 from other electronic devices (e.g., the first electronic device 210, the second electronic device 220). For example, the identification information of the third electronic device 230 may include any one of a medium access control (MAC) address of the third electronic device 230, an IP address of the third electronic device 230, or an international mobile equipment identity (IMEI) of the third electronic device 230.

According to an example, a condition associated with a channel state may refer to a condition associated with channel state information of a signal transmitted (or broadcast) by the third electronic device 230. The third electronic device 230 may transmit a signal including data to the second electronic device 220 to perform a short-range wireless communication, and the second electronic device 220 may receive the signal transmitted by the third electronic device 230 and identify (or determine, measure, obtain) channel state information (CSI) of the signal. The second electronic device 220 may identify whether the identified (or determined, measured, obtained) channel state information satisfies a condition associated with the channel state.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

According to an example, a condition associated with a channel state may include a condition in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 that differs by a designated degree or more from a specific value (e.g., the channel state information identified (or determined, measured, obtained) by the second electronic device 220, based on the signal transmitted by the first electronic device 210 to the second electronic device 220) may refer to signals that differ in phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are not in proximity to each other.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

According to an example, a value associated with a condition may include a value used by the second electronic device 220 to determine whether the condition is satisfied, and may include a value used for comparison with channel state information of a signal transmitted (or broadcast) by the third electronic device 230, the channel state information being measured by the second electronic device 220. According to an example, based on the channel state information of the signal transmitted (or broadcast) by the third electronic device 230 and/or the value associated with the condition included in the first message, the second electronic device 220 may determine (or identify) whether the channel state information of the signal transmitted (or broadcast) by the third electronic device 230 satisfies the condition associated with the channel state information included in the first message.

According to an example, the value associated with the condition may include channel state information of a signal transmitted by the first electronic device 210 to the second electronic device 220. The first electronic device 210 may identify (or determine, obtain) the channel state information of the signal transmitted by the second electronic device 220 to the first electronic device 210, and may determine the channel state information of the signal transmitted by the first electronic device 210 to the second electronic device 220, based on the channel state information of the signal transmitted by the second electronic device 220 to the first electronic device 210. The modulation of the signal via the short-range wireless communication may use a frequency divisional duplexing (FDD) scheme and may have a reciprocal feature. Accordingly, the channel state information of the signal transmitted by the first electronic device 210 to the second electronic device 220 may be substantially the same as the channel state information of the signal transmitted by the second electronic device 220 to the first electronic device 210.

According to an example, the processor 420 may receive the first message and determine whether to perform an operation of determining whether the channel state information measured based on the signal transmitted by the third electronic device 230 satisfies a condition included in the first message. In the case that the processor 420 determines to perform the operation of determining whether the channel state information measured based on the signal transmitted by the third electronic device 230 satisfies the condition included in the first message, the processor 420 may control the communication circuit 410 to transmit, to the first electronic device 210, a response message indicating that the operation of determining whether the channel state information measured based on the signal transmitted by the third electronic device 230 satisfies the condition included in the first message has been performed.

According to an example, the first electronic device 210 may receive a response message indicating that the second electronic device 220 has performed an operation of determining whether the channel state information measured based on the signal transmitted by the third electronic device 230 satisfies a condition included in the first message. In response to receiving the response message, the first electronic device 210 may not perform the operation of identifying (or determining, obtaining, measuring) the channel state information based on the signal transmitted (or broadcast) by the third electronic device 230. By not performing (or interrupting) the operation of identifying (or determining, obtaining, measuring) the channel state information based on the signal transmitted (or broadcast) by the third electronic device 230, the first electronic device 210 may reduce power consumption (or battery consumption) caused by the operation of identifying (or determining, obtaining, measuring) the channel state information based on the signal transmitted (or broadcast) by the third electronic device 230.

The processor 420 may receive a signal transmitted by the third electronic device 230 after the transmission of the response message. The third electronic device 230 may transmit, to the second electronic device 220, various signals for performing short-range wireless communication provided by the second electronic device 220. According to an example, the third electronic device 230 may, in order to transmit data to an entity that exists outside of the short-range wireless communication system 200, transmit a signal including the data to the second electronic device 220. Alternatively, the third electronic device 230 may transmit signals (e.g., control frames, beacon frames) for controlling the short-range wireless communication to the second electronic device 220.

The processor 420 may control the communication circuit 410 to receive the signal transmitted or broadcast by the third electronic device 230 and determine (or identify, obtain) channel state information of the signal. The processor 420 may identify whether the channel state information of the signal satisfies a condition included in the first message. The processor 420 may not transmit a separate message to the first electronic device 210 in the case that the channel state information of the signal does not satisfy the condition included in the first message. Alternatively, in the case that the channel state information of the signal does not satisfy the condition included in the first message, the processor 420 may transmit, to the first electronic device 210, a message indicating that the condition is not satisfied.

In the case that the channel state information of a signal satisfies a condition included in the first message, the processor 420 may transmit, to the first electronic device 210, a second message including information indicating that the channel state information of the signal transmitted by the third electronic device 230 satisfies the condition (included in the first message). The processor 420 may transmit the second message to the first electronic device 210 while the short-range wireless communication function of the first electronic device 210 is in an active state (e.g., during a duration interval included in the TWT parameters when the first electronic device 210 supports the TWT protocol). When it is determined that the short-range wireless communication function of the first electronic device 210 is in an inactive state, the processor 420 may not perform the transmission of the second message and may be in standby until the short-range wireless communication function of the first electronic device 210 switches to an active state.

In the case that the channel state information of a signal satisfies a condition included in the first message, the information indicating that the channel state information of the signal transmitted by the third electronic device 230 satisfies the condition included in the first message may be referred to as context information. In response to receiving the second message, the first electronic device 210 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the second electronic device 220. The first electronic device 210 may activate and/or perform a service based on the channel state information included in the second message.

In the case that the second electronic device 220 receives a third message requesting termination of the determination by the second electronic device 220 of whether the channel state information of the signal transmitted (or broadcast) by the third electronic device 230 satisfies a condition, the processor 420 may terminate the operation of determining whether the channel state information of the signal transmitted (or broadcast) by the third electronic device 230 satisfies the condition.

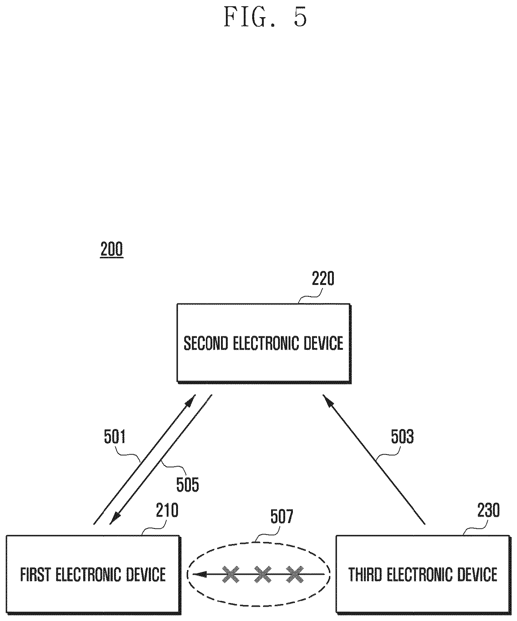

FIG. 5 illustrates an example in which a first electronic device receives, from a second electronic device, a second message including information indicating that channel state information measured using a signal transmitted by a third electronic device to the second electronic device satisfies a designated condition.

The first electronic device (e.g., the first electronic device 210 of FIG. 3) may control the communication circuit 310 to perform data transmission and/or reception via short-range wireless communication. According to an example, the first electronic device 210 may perform the role of an STA of a short-range wireless communication system (e.g., the short-range wireless communication system 200 of FIG. 2), and the second electronic device (e.g., the second electronic device 220 of FIG. 2) may perform the role of an AP of the short-range wireless communication system 200. The first electronic device 210 may control the communication circuit 310 to transmit and/or receive data through the short-range wireless communication provided by the second electronic device 220. According to an example, the first electronic device 210 may perform data transmission and/or reception via short-range wireless communication with an entity existing outside of the short-range wireless communication system 200, data may be transmitted to the entity existing outside of the short-range wireless communication system 200 via the second electronic device 220, and data transmitted by the entity existing outside of the short-range wireless communication system 200 may be transmitted to the first electronic device 210 via the second electronic device 220.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition (indicated by reference numeral 501).

According to an example, the first electronic device 210 may, prior to activating a service using the third electronic device 230, request, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. Alternatively, the first electronic device 210 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, while performing a service using the third electronic device 230.

The first electronic device 210 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

The second electronic device 220 may receive a first message from the first electronic device 210, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

The second electronic device 220 may receive signals transmitted by the third electronic device 230 (indicated by reference numeral 503). The third electronic device 230 may transmit, to the second electronic device 220, various signals for performing the short-range wireless communication provided by the second electronic device 220. According to an example, the third electronic device 230 may transmit a signal including data to the second electronic device 220 in order to transmit data to an entity that exists outside of the short-range wireless communication system 200. Alternatively, the third electronic device 230 may transmit signals (e.g., control frames, beacon frames) for controlling the short-range wireless communication to the second electronic device 220.

The second electronic device 220 may receive the signal transmitted or broadcast by the third electronic device 230, and may determine (or identify, obtain) channel state information of the signal. The second electronic device 220 may determine whether the channel state information of the signal satisfies a condition included in the first message. The second electronic device 220 may not transmit a separate message to the first electronic device 210 in the case that the channel state information of the signal does not satisfy a condition included in the first message. Alternatively, in the case that the channel state information of the signal does not satisfy a condition included in the first message, the second electronic device 220 may transmit, to the first electronic device 210, a message indicating that the condition is not satisfied.

In the case that the channel state information of a signal satisfies a condition included in the first message, the second electronic device 220 may transmit, to the first electronic device 210, a second message including information indicating that the channel state information of the signal transmitted by the third electronic device 230 satisfies a condition (included in the first message) (indicated by reference numeral 505).

In response to receiving the second message, the first electronic device 210 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the second electronic device 220. The first electronic device 210 may activate and/or perform a service based on the channel state information included in the second message.

Referring to FIG. 5, the first electronic device 210 may reduce power consumption (or battery consumption) by causing the second electronic device 220 to identify the channel state information of the signal 503 transmitted by the third electronic device 230, instead of directly identifying the channel state information of the signal 507 transmitted by the third electronic device 230.

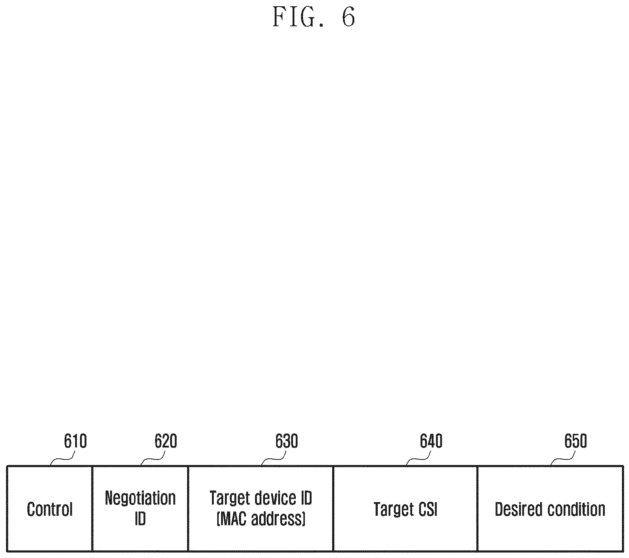

FIG. 6 illustrates the format of a first message and a second message according to an embodiment.

The first message and the second message may each include at least one of a control field 610, a negotiation identification information (ID) field 620, a target device ID field 630 indicating a target from which the channel state information is to be measured, a target channel state information (CSI) field 640 indicating channel state information used to determine whether a condition is satisfied, and/or a desired condition field 650 indicating a condition associated with a channel state.

According to an example, the control field 610 may include control information associated with at least one field (target CSI field 640) following the control field 610.

For example, the control field 610 may include information indicating that the target CSI field 640 exists, and information indicating information that is usable as target channel state information (e**.**g., information indicating to use the channel state information of a signal transmitted by the first electronic device 210 to the second electronic device 220 as target channel state information (target CSI not existing with current CSI between myself used for target CSI), and to use the channel state information of a signal transmitted by the third electronic device 230 as target channel state information (target CSI not existing with current CSI between target device used for target CSI)).

According to an example, the control field 610 may include information indicating the type of message shown in FIG. 6 (e.g., a negotiation requested for the second electronic device 220 to perform an operation to identify channel state information, a negotiation rejected for the second electronic device 220 to perform an operation to identify channel state information, a negotiation accepted for the second electronic device 220 to perform an operation to identify channel state information, and a desired event notified that the channel state information satisfies a designated condition).

For example, the control field 610 may distinguish the first message from the second message. For example, the message shown in FIG. 6 may be a first message when the control field 610 includes information related to a location of the third electronic device 230 included in the short-range wireless communication system 200 (or information related to a relative location between the first electronic device 210 and the third electronic device 230) or information (or an indicator) indicating that information indicating whether the location of the third electronic device 230 satisfies a designated condition is requested from the second electronic device 220. In another example, when the control field 610 includes information (or an indicator) indicating that channel state information of a signal transmitted by the third electronic device 230 satisfies a designated condition, the message shown in FIG. 6 may be a second message.

According to an example, the negotiation ID field 620 may include identification information about a negotiation to perform the operation of identifying the channel state information by the second electronic device 220.

According to an example, the target device ID field 630, which indicates a target for measurement of the channel state information, may include identification information of an electronic device (e.g., the third electronic device 230) that transmits a signal corresponding to the channel state information.

For example, the identification information of the third electronic device 230 may include any one of a medium access control (MAC) address of the third electronic device 230, an IP address of the third electronic device 230, or an international mobile equipment identity (IMEI) of the third electronic device 230.

According to an example, the target CSI field 640, which indicates the channel state information utilized to determine whether the condition is satisfied, may include values associated with the conditions shown in FIGS. 3 and 4.

According to an example, a value associated with a condition may include a value used by the second electronic device 220 to determine whether the condition is satisfied, and may include a value used for comparison with channel state information of a signal transmitted (or broadcast) by the third electronic device 230, the channel state information being measured by the second electronic device 220. According to an example, based on the channel state information of the signal transmitted (or broadcast) by the third electronic device 230 and/or the value associated with the condition included in the first message, the second electronic device 220 may determine (or identify) whether the channel state information of the signal transmitted (or broadcast) by the third electronic device 230 satisfies the condition associated with the channel state information included in the first message.

According to an example, the value associated with the condition may include channel state information of a signal transmitted by the first electronic device 210 to the second electronic device 220. The first electronic device 210 may identify (or determine, obtain) the channel state information of the signal transmitted by the second electronic device 220 to the first electronic device 210, and may determine the channel state information of the signal transmitted by the first electronic device 210 to the second electronic device 220, based on the channel state information of the signal transmitted by the second electronic device 220 to the first electronic device 210. The modulation of the signal via the short-range wireless communication may use a frequency divisional duplexing (FDD) scheme and may have a reciprocal feature. Accordingly, the channel state information of the signal transmitted by the first electronic device 210 to the second electronic device 220 may be substantially the same as the channel state information of the signal transmitted by the second electronic device 220 to the first electronic device 210.

According to an example, a desired condition field 650 indicating a condition associated with the channel state may include information specifying the condition associated with the channel state.

According to an example, a condition associated with a channel state may refer to a condition associated with channel state information of a signal transmitted (or broadcast) by the third electronic device 230. The third electronic device 230 may transmit a signal including data to the second electronic device 220 to perform a short-range wireless communication, and the second electronic device 220 may receive the signal transmitted by the third electronic device 230 and identify (or determine, measure, obtain) channel state information (CSI) of the signal. The second electronic device 220 may identify whether the identified (or determined, measured, obtained) channel state information satisfies a condition associated with the channel state.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

According to an example, a condition associated with a channel state may include a condition in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 that differs by a designated degree or more from a specific value (e.g., the channel state information identified (or determined, measured, obtained) by the second electronic device 220, based on the signal transmitted by the first electronic device 210 to the second electronic device 220) may refer to signals that differ in phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are not in proximity to each other.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

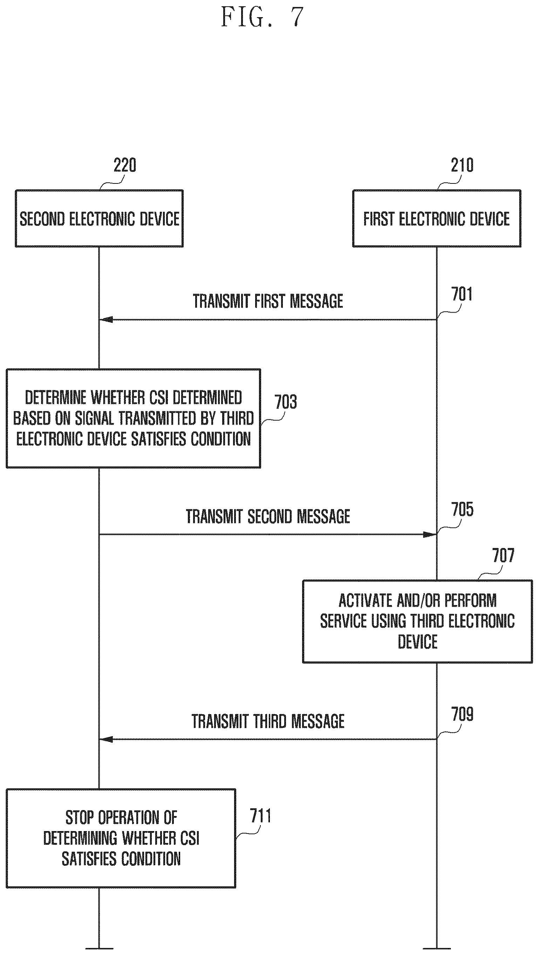

FIG. 7 illustrates an example in which a first electronic device requests a second electronic device to perform an operation of determining whether channel state information measured using a signal transmitted by a third electronic device to the second electronic device satisfies a designated condition.

The first electronic device (e.g., the first electronic device 210 of FIG. 3) may transmit a first message to the second electronic device (e.g., the second electronic device 220 of FIG. 4) in operation 701.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, prior to activating a service using the third electronic device 230. Alternatively, the first electronic device 210 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, during performing of the service using the third electronic device 230.

The first electronic device 210 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

According to an example, the identification information of the third electronic device 230 may include various information that can distinguish the third electronic device 230 from other electronic devices (e.g., the first electronic device 210, the second electronic device 220). For example, the identification information of the third electronic device 230 may include any one of a medium access control (MAC) address of the third electronic device 230, an IP address of the third electronic device 230, or an international mobile equipment identity (IMEI) of the third electronic device 230.

According to an example, a condition associated with a channel state may refer to a condition associated with channel state information of a signal transmitted (or broadcast) by the third electronic device 230. The third electronic device 230 may transmit a signal including data to the second electronic device 220 to perform a short-range wireless communication, and the second electronic device 220 may receive the signal transmitted by the third electronic device 230 and identify (or determine, measure, obtain) channel state information (CSI) of the signal. The second electronic device 220 may identify whether the identified (or determined, measured, obtained) channel state information satisfies a condition associated with the channel state.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

According to an example, a condition associated with a channel state may include a condition in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 that differs by a designated degree or more from a specific value (e.g., the channel state information identified (or determined, measured, obtained) by the second electronic device 220, based on the signal transmitted by the first electronic device 210 to the second electronic device 220) may refer to signals that differ in phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are not in proximity to each other.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

According to an example, a value associated with a condition may include a value used by the second electronic device 220 to determine whether the condition is satisfied, and may include a value used for comparison with channel state information of a signal transmitted (or broadcast) by the third electronic device 230, the channel state information being measured by the second electronic device 220. According to an example, based on the channel state information of the signal transmitted (or broadcast) by the third electronic device 230 and/or the value associated with the condition included in the first message, the second electronic device 220 may determine (or identify) whether the channel state information of the signal transmitted (or broadcast) by the third electronic device 230 satisfies the condition associated with the channel state information included in the first message.

According to an example, the value associated with the condition may include channel state information of a signal transmitted by the first electronic device 210 to the second electronic device 220. The first electronic device 210 may identify (or determine, obtain) the channel state information of the signal transmitted by the second electronic device 220 to the first electronic device 210, and may determine the channel state information of the signal transmitted by the first electronic device 210 to the second electronic device 220, based on the channel state information of the signal transmitted by the second electronic device 220 to the first electronic device 210. The modulation of the signal via the short-range wireless communication may use a frequency divisional duplexing (FDD) scheme and may have a reciprocal feature. Accordingly, the channel state information of the signal transmitted by the first electronic device 210 to the second electronic device 220 may be substantially the same as the channel state information of the signal transmitted by the second electronic device 220 to the first electronic device 210.

According to an example, the second electronic device 220 may receive the first message and determine whether to perform an operation of determining whether the channel state information measured based on the signal transmitted by the third electronic device 230 satisfies a condition included in the first message. In the case that the second electronic device 220 determines to perform the operation of determining whether the channel state information measured based on the signal transmitted by the third electronic device 230 satisfies the condition included in the first message, the second electronic device 220 may transmit, to the first electronic device 210, a response message indicating that the operation of determining whether the channel state information measured based on the signal transmitted by the third electronic device 230 satisfies the condition included in the first message has been performed.

According to an example, the first electronic device 210 may receive a response message indicating that the second electronic device 220 has performed an operation of determining whether the channel state information measured based on the signal transmitted by the third electronic device 230 satisfies a condition included in the first message. In response to receiving the response message, the first electronic device 210 may control the communication circuit 310 to prevent (or interrupt) the operation of identifying (or determining, obtaining, measuring) the channel state information based on the signal transmitted (or broadcast) by the third electronic device 230. By preventing (or interrupting) the communication circuit 310 from performing the operation of identifying (or determining, obtaining, measuring) the channel state information based on the signal transmitted (or broadcast) by the third electronic device 230, the first electronic device 310 may reduce power consumption (or battery consumption) caused by the operation of identifying (or determining, obtaining, measuring) the channel state information based on the signal transmitted (or broadcast) by the third electronic device 230.

After the first message is transmitted to the second electronic device 220 (or after a response message corresponding to the first message is received from the second electronic device 220), the first electronic device 210 may switch the communication circuit 310 to an idle or inactive state.

Alternatively, after the first message is transmitted to the second electronic device 220 (or after a response message corresponding to the first message is received from the second electronic device 220), the first electronic device 210 may switch the communication circuit 310 to an idle or inactive state during a designated time period.

The second electronic device (e.g., the second electronic device 220 of FIG. 4) may determine whether the channel state information (CSI) determined based on the signal transmitted by the third electronic device 230 satisfies a condition in operation 703.

The second electronic device 220 may receive a signal transmitted by the third electronic device 230 after the transmission of the response message. The third electronic device 230 may transmit, to the second electronic device 220, various signals for performing the short-range wireless communication provided by the second electronic device 220. According to an example, the third electronic device 230 may transmit a signal including data to the second electronic device 220 for transmitting data to an entity that exists outside of the short-range wireless communication system 200. Alternatively, the third electronic device 230 may transmit signals (e.g., control frames, beacon frames) for controlling the short-range wireless communication to the second electronic device 220.

The second electronic device 220 may control the communication circuit 410 to receive the signal transmitted or broadcast by the third electronic device 230 and determine (or identify, obtain) channel state information of the signal. The second electronic device 220 may identify whether the channel state information of the signal satisfies a condition included in the first message. In the case that the channel state information of the signal does not satisfy a condition included in the first message, the second electronic device 220 may not transmit a separate message to the first electronic device 210. Alternatively, in the case that the channel state information of the signal does not satisfy a condition included in the first message, the second electronic device 220 may transmit, to the first electronic device 210, a message indicating that the condition is not satisfied.

The second electronic device 220 may transmit the second message to the first electronic device 210 in operation 705.

In the case that the channel state information of the signal satisfies a condition included in the first message, the second electronic device 220 may transmit, to the first electronic device 210, a second message including information indicating that the channel state information of the signal transmitted by the third electronic device 230 satisfies the condition (included in the first message).

The first electronic device 210 may activate and/or perform a service using the third electronic device 230 in operation 707.

The first electronic device 210 may receive, from the second electronic device 220, a second message including information indicating that the channel state information of the signal transmitted by the third electronic device 230 satisfies the condition (included in the first message), the channel state information being measured by the second electronic device 220.

In response to receiving the second message (or upon receiving the second message), the first electronic device 210 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the second electronic device 220. The first electronic device 210 may activate and/or perform services based on the channel state information included in the second message.

The first electronic device 210 may transmit a third message to the second electronic device 220 in operation 709.

According to an example, the first electronic device 210 may control the communication circuit 410 to transmit a third message requesting termination of the determination by the second electronic device 220 of whether the channel state information of the signal transmitted (or broadcast) by the third electronic device 230 satisfies a condition.

According to an example, when the service using the first electronic device 210 and/or the third electronic device 230 is terminated (or interrupted) and/or is inactive, the first electronic device 210 may control the communication circuit 310 to transmit a third message requesting termination of the determination by the second electronic device 220 of whether the channel state information of the signal transmitted (or broadcast) by the third electronic device 230 satisfies a condition.

According to an example, based on identifying that the service using the first electronic device 210 and/or the third electronic device 230 is a designated service, the first electronic device 210 may control the communication circuit 310 to transmit a third message requesting termination of the determination by the second electronic device 220 of whether the channel state information of the signal transmitted (or broadcast) by the third electronic device 230 satisfies a condition.

According to an example, a designated service may include a service that requires low latency. For example, the designated service may include a screen sharing service. When the first electronic device 210 and/or the third electronic device 230 are performing a service that requires low latency, the communication circuit 310 of the first electronic device 210 may be in a state that is difficult to switch to an inactive state (or an idle state), and the processor 210 may identify channel state information based on signals (which may include information related to the service) transmitted (or broadcast) by the third electronic device 230. Accordingly, the first electronic device 210 may control the communication circuit 310 to transmit a third message to the second electronic device 220 requesting that the second electronic device 220 terminate the operation of determining whether the channel state information of the signal transmitted (or broadcast) by the third electronic device 230 satisfies a condition.

The second electronic device 220 may interrupt (or terminate) the operation of determining whether the channel state information (CSI) satisfies the condition based on the reception of the third message, in operation 711.

In the case that the second electronic device 220 receives a third message requesting termination of the determination by the second electronic device 220 of whether the channel state information of the signal transmitted (or broadcast) by the third electronic device 230 satisfies a condition, the second electronic device 220 may terminate the operation of determining whether the channel state information of the signal transmitted (or broadcast) by the third electronic device 230 satisfies the condition.

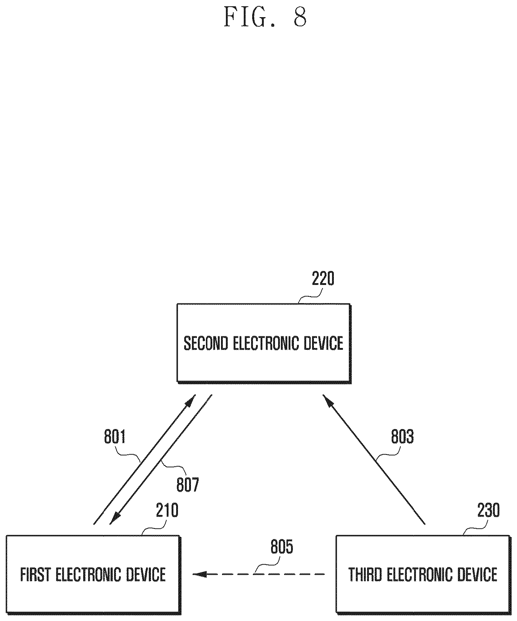

FIG. 8 illustrates an example in which a first electronic device activates and/or performs a service using a third electronic device.

The first electronic device (e.g., the first electronic device 210 of FIG. 3) may control the communication circuit 310 to perform data transmission and/or reception via short-range wireless communication. According to an example, the first electronic device 210 may perform the role of an STA of a short-range wireless communication system (e.g., the short-range wireless communication system 200 of FIG. 2), and the second electronic device (e.g., the second electronic device 220 of FIG. 2) may perform the role of an AP of the short-range wireless communication system 200. The first electronic device 210 may control the communication circuit 310 to transmit and/or receive data through the short-range wireless communication provided by the second electronic device 220. According to an example, the first electronic device 210 may perform, via short-range wireless communication, data transmission and/or reception to and/or from an entity existing outside of the short-range wireless communication system 200, data may be transmitted to the entity existing outside of the short-range wireless communication system 200 via the second electronic device 220, and data transmitted by the entity existing outside of the short-range wireless communication system 200 may be transmitted to the first electronic device 210 via the second electronic device 220.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, prior to activating a service using the third electronic device 230. Alternatively, the first electronic device 210 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, during performing of the service using the third electronic device 230.

The first electronic device 210 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

The second electronic device 220 may receive a first message from the first electronic device 210, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

The second electronic device 220 may receive signals transmitted by the third electronic device 230 (indicated by reference numeral 803). The third electronic device 230 may transmit, to the second electronic device 220, various signals for performing the short-range wireless communication provided by the second electronic device 220. According to an example, the third electronic device 230 may transmit a signal including data to the second electronic device 220 in order to transmit data to an entity that exists outside of the short-range wireless communication system 200. Alternatively, the third electronic device 230 may transmit signals (e.g., control frames, beacon frames) for controlling the short-range wireless communication to the second electronic device 220.

In the case that the channel state information of a signal satisfies a condition included in the first message (e.g., a condition 805 in which the first electronic device 210 and the third electronic device 230 are in proximity to each other), the second electronic device 220 may transmit, to the first electronic device 210, a second message including information indicating that the channel state information of the signal transmitted by the third electronic device 230 satisfies a condition (included in the first message) (indicated by reference numeral 807).

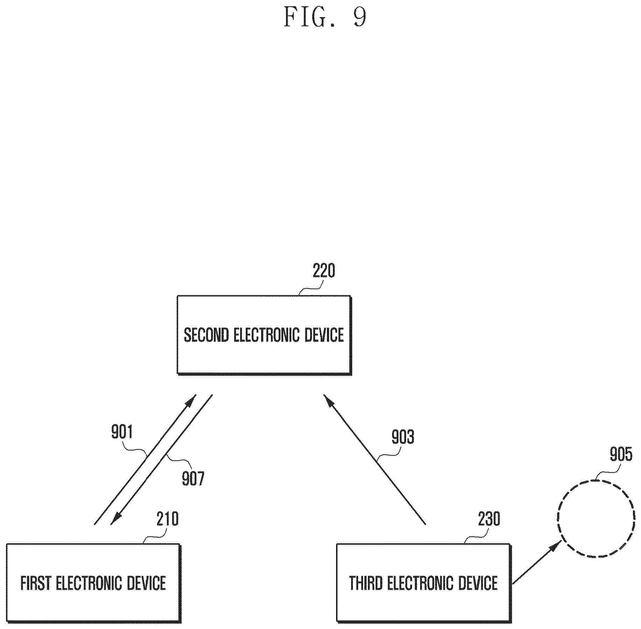

FIG. 9 illustrates an example in which a first electronic device activates and/or performs a service using a third electronic device.

The first electronic device (e.g., the first electronic device 210 of FIG. 3) may control the communication circuit 310 to perform data transmission and/or reception via short-range wireless communication. According to an example, the first electronic device 210 may perform the role of an STA of a short-range wireless communication system (e.g., the short-range wireless communication system 200 of FIG. 2), and the second electronic device (e.g., the second electronic device 220 of FIG. 2) may perform the role of an AP of the short-range wireless communication system 200. The first electronic device 210 may control the communication circuit 310 to transmit and/or receive data through the short-range wireless communication provided by the second electronic device 220. According to an example, the first electronic device 210 may perform, via short-range wireless communication, data transmission and/or reception to and/or from an entity existing outside of the short-range wireless communication system 200, data may be transmitted to the entity existing outside of the short-range wireless communication system 200 via the second electronic device 220, and data transmitted by the entity existing outside of the short-range wireless communication system 200 may be transmitted to the first electronic device 210 via the second electronic device 220.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, prior to activating a service using the third electronic device 230. Alternatively, the first electronic device 210 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, during performing of the service using the third electronic device 230.

The first electronic device 210 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

The second electronic device 220 may receive a first message from the first electronic device 210, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

The second electronic device 220 may receive signals transmitted by the third electronic device 230 (indicated by reference numeral 903). The third electronic device 230 may transmit, to the second electronic device 220, various signals for performing the short-range wireless communication provided by the second electronic device 220. According to an example, the third electronic device 230 may transmit a signal including data to the second electronic device 220 in order to transmit data to an entity that exists outside of the short-range wireless communication system 200. Alternatively, the third electronic device 230 may transmit signals (e.g., control frames, beacon frames) for controlling the short-range wireless communication to the second electronic device 220.

In the case that the channel state information of a signal satisfies a condition included in the first message (e.g., a condition in which the third electronic device 230 exists at a specific location (indicated by reference numeral 905)), the second electronic device 220 may transmit, to the first electronic device 210, a second message including information indicating that the channel state information of the signal transmitted by the third electronic device 230 satisfies a condition (included in the first message) (indicated by reference numeral 907).

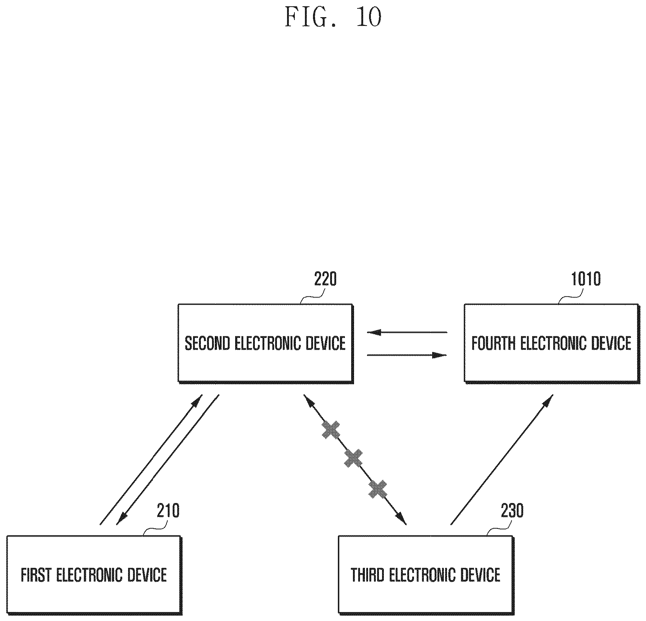

FIG. 10 illustrates an example in which a fourth electronic device performs an operation of determining whether channel state information measured using a signal transmitted by the third electronic device to the second electronic device satisfies a designated condition.

According to an example, the second electronic device (e.g., the second electronic device 220 of FIG. 4) may not be able to determine (or identify, obtain) channel state information of a signal transmitted by the third electronic device (e.g., the third electronic device 230 of FIG. 2) due to various causes.

For example, the second electronic device 220 may not be able to determine (or obtain or identify) channel state information of a signal transmitted by the third electronic device 230 in a situation in which the processor (e.g., the processor 420 in FIG. 4) of the second electronic device 220 is under heavy load.

In another example, the second electronic device 220 may reject to negotiate performing an operation of identifying whether the channel state information of the signal transmitted by the third electronic device 230 satisfies a designated condition (negotiation rejected)

In another example, the second electronic device 220 may be an access point (AP) to which the methods described herein have not been applied, and may not be able to determine (or identify, obtain) channel state information of the signal transmitted by the third electronic device 230.

When the second electronic device 220 is unable to determine (or identify, obtain) channel state information of the signal transmitted by the third electronic device 230 due to various causes described above, another electronic device (e.g., a fourth electronic device 1010) connected to the second electronic device 220 may be used to determine the channel state information of the signal transmitted by the third electronic device 230.

According to an example, the first electronic device 210 may transmit, to the second electronic device 220, a first message requesting to perform an operation of identifying whether the channel state information of the signal transmitted by the third electronic device 230 satisfies a designated condition. However, as described above, second electronic device 220 may not be able to perform the operation of identifying whether the channel state information of the signal transmitted by the third electronic device 230 satisfies the designated condition.

The fourth electronic device 1010 may detect that the second electronic device 220 is in a state where it is unable to perform the operation of identifying whether the channel state information of the signal transmitted by the third electronic device 230 satisfies the designated condition. The fourth electronic device 1010 may be an entity connected to the second electronic device 220 via short-range wireless communication, such as an entity that performs the role of a station (STA).

According to an example, in the case that the fourth electronic device 1010 receives (or sniffs) a response message including information indicating rejection of negotiation for performing an operation of identifying whether the channel state information of the signal transmitted by the third electronic device 230 satisfies the designated condition (negotiation rejected), the fourth electronic device may detect that the second electronic device 220 is in a state where it is unable to perform the operation of identifying whether the channel state information of the signal transmitted by the third electronic device 230 satisfies the designated condition.

According to an example, in the case of receiving (or sniffing) the first message and identifying that a response message corresponding to the first message is not transmitted within a designated time period, the fourth electronic device 1010 may detect that the second electronic device 220 is in a state where it is unable to perform the operation of identifying whether the channel state information of the signal transmitted by the third electronic device 230 satisfies the designated condition.

When it is detected that the second electronic device 220 is in a state where it is unable to perform the operation of identifying whether the channel state information of the signal transmitted by the third electronic device 230 satisfies the designated condition, the fourth electronic device 1010 may perform the operation of identifying whether the channel state information of the signal transmitted by the third electronic device 230 satisfies the designated condition.

The second electronic device 220 may, after receiving the first message, transmit a signal requesting to perform an operation of identifying whether the channel state information of the signal transmitted by the third electronic device 230 satisfies a designated condition to the fourth electronic device 1010, based on the failure to perform an operation of identifying whether the channel state information of the signal transmitted by the third electronic device 230 satisfies a designated condition.

The fourth electronic device 1010 may receive (or sniff) the signal transmitted (or broadcast) by the third electronic device 230, and identify the channel state information of the signal. When the channel state information satisfies a condition included in the first message, the fourth electronic device 1010 may transmit a second message indicating that the channel state information satisfies a condition to the first electronic device 210 via the second electronic device 220.

In response to receiving the second message (or upon receiving the second message), the first electronic device 210 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the fourth electronic device 1010. The first electronic device 210 may activate and/or perform services based on the channel state information included in the second message.

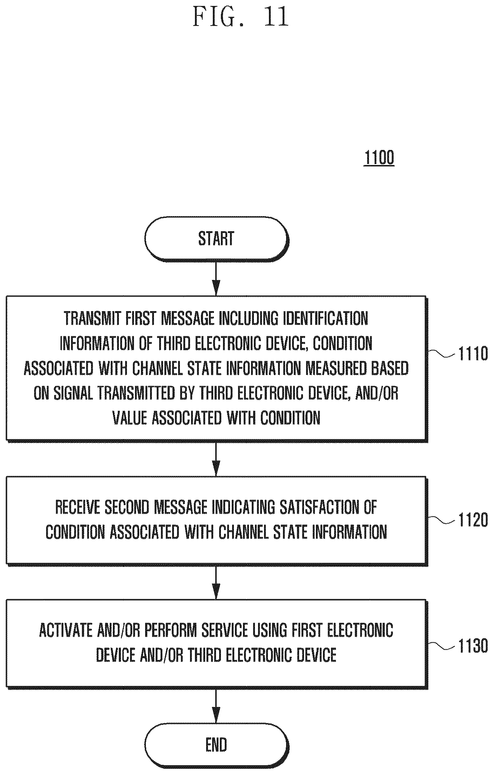

FIG. 11 is an operational flowchart illustrating an operation method of a first electronic device according to an embodiment.

Referring to FIG. 11, in operation 1110, the first electronic device (e.g., the first electronic device 210 of FIG. 3) may transmit a first message to a second electronic device (e.g., the second electronic device 220 of FIG. 4), the first message including identification information of a third electronic device (e.g., the third electronic device 230 of FIG. 2), a condition associated with channel state information measured based on a signal transmitted by the third electronic device 230 to the second electronic device 220, and/or a value associated with the condition.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition.

According to an example, the first electronic device 210 may perform an operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, prior to activating a service using the third electronic device 230. Alternatively, the first electronic device 210 may perform the operation of requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition, during performing of the service using the third electronic device 230.

The first electronic device 210 may transmit a first message to the second electronic device 220, wherein the first message is for requesting, from the second electronic device 220, information related to a location of the third electronic device 230 included in the short-range wireless communication system 200 (or information related to a relative location between the first electronic device 210 and the third electronic device 230) or information indicating whether the location of the third electronic device 230 satisfies a designated condition. The first message may be transmitted through at least one channel established (or generated, configured) between the first electronic device 210 and the second electronic device 220.

The first message may include at least one of the identification information of the third electronic device 230, a condition associated with the channel state information, which is measured by the second electronic device 220 based on the signal transmitted by the third electronic device 230, and/or a value associated with the condition. Depending on the implementation, the first message may not include the identification information of the third electronic device 230 and the value associated with the condition.

According to an example, the identification information of the third electronic device 230 may include various information that can distinguish the third electronic device 230 from other electronic devices (e.g., the first electronic device 210, the second electronic device 220). For example, the identification information of the third electronic device 230 may include any one of a medium access control (MAC) address of the third electronic device 230, an IP address of the third electronic device 230, or an international mobile equipment identity (IMEI) of the third electronic device 230.

According to an example, a condition associated with a channel state may refer to a condition associated with channel state information of a signal transmitted (or broadcast) by the third electronic device 230. The third electronic device 230 may transmit a signal including data to the second electronic device 220 to perform a short-range wireless communication, and the second electronic device 220 may receive the signal transmitted by the third electronic device 230 and identify (or determine, measure, obtain) channel state information (CSI) of the signal. The second electronic device 220 may identify whether the identified (or determined, measured, obtained) channel state information satisfies a condition associated with the channel state.

According to an example, a condition associated with a channel state may include a condition in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 as being similar by a designated degree or more to a specific value (e.g., the channel state information identified (or determined, measured, obtained) by the second electronic device 220, based on the signal transmitted by the first electronic device 210 to the second electronic device 220) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are in proximity to each other.

According to an example, a condition associated with a channel state may include a condition in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220). The channel state information identified (or determined, measured, obtained) by the second electronic device 220 that differs by a designated degree or more from a specific value (e.g., the channel state information identified (or determined, measured, obtained) by the second electronic device 220, based on the signal transmitted by the first electronic device 210 to the second electronic device 220) may refer to signals that differ in phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 differs by a designated degree or more from a specific value (e.g., the channel state information identified (or determined, measured, obtained) by the second electronic device 220, based on the signal transmitted by the first electronic device 210 to the second electronic device 220) may refer to a situation in which the first electronic device 210 and the third electronic device 230 are not in proximity to each other.

According to an example, a condition associated with a channel state may include a condition in which the channel state information identified (or determined, measured, obtained) by the second electronic device 220 is similar by a designated degree or more to a specific value (e.g., channel state information obtained when the third electronic device 230 exists at a specific location). The channel state information identified (or determined, measured, obtained) by the second electronic device 220 as being similar by a designated degree or more to a specific value (e.g., channel state information obtained when the third electronic device 230 exists at a specific location) may refer to signals having a similar phase and/or amplitude. As described above in FIG. 2, the channel state information may be a value determined based on the location of the electronic device (e.g., the third electronic device 230) that has transmitted a signal. A situation in which the channel state information identified (or determined, measured, obtained) by the second electronic device 220 is similar by a designated degree or more to a specific value (e.g., channel state information obtained when the third electronic device 230 exists at a specific location) may indicate that the third electronic device 230 exists at a specific location.

According to an example, a value associated with a condition may include a value used by the second electronic device 220 to determine whether the condition is satisfied, and may include a value used for comparison with channel state information of a signal transmitted (or broadcast) by the third electronic device 230, the channel state information being measured by the second electronic device 220. According to an example, based on the channel state information of the signal transmitted (or broadcast) by the third electronic device 230 and/or the value associated with the condition included in the first message, the second electronic device 220 may determine (or identify) whether the channel state information of the signal transmitted (or broadcast) by the third electronic device 230 satisfies the condition associated with the channel state information included in the first message.

According to an example, the value associated with the condition may include channel state information of a signal transmitted by the first electronic device 210 to the second electronic device 220. The first electronic device 210 may identify (or determine, obtain) the channel state information of the signal transmitted by the second electronic device 220 to the first electronic device 210, and may determine the channel state information of the signal transmitted by the first electronic device 210 to the second electronic device 220, based on the channel state information of the signal transmitted by the second electronic device 220 to the first electronic device 210. The modulation of the signal via the short-range wireless communication may use a frequency divisional duplexing (FDD) scheme and may have a reciprocal feature. Accordingly, the channel state information of the signal transmitted by the first electronic device 210 to the second electronic device 220 may be substantially the same as the channel state information of the signal transmitted by the second electronic device 220 to the first electronic device 210.

According to an example, the second electronic device 220 may receive the first message and determine whether to perform an operation of determining whether the channel state information measured based on the signal transmitted by the third electronic device 230 satisfies a condition included in the first message. In the case that the second electronic device 220 determines to perform the operation of determining whether the channel state information measured based on the signal transmitted by the third electronic device 230 satisfies the condition included in the first message, the second electronic device 220 may transmit, to the first electronic device 210, a response message indicating that the operation of determining whether the channel state information measured based on the signal transmitted by the third electronic device 230 satisfies the condition included in the first message has been performed.

According to an example, the first electronic device 210 may receive a response message indicating that the second electronic device 220 has performed an operation of determining whether the channel state information measured based on the signal transmitted by the third electronic device 230 satisfies a condition included in the first message. In response to receiving the response message, the first electronic device 210 may control the communication circuit 310 to prevent (or interrupt) the operation of identifying (or determining, obtaining, measuring) the channel state information based on the signal transmitted (or broadcast) by the third electronic device 230. By preventing (or interrupting) the communication circuit 310 from performing the operation of identifying (or determining, obtaining, measuring) the channel state information based on the signal transmitted (or broadcast) by the third electronic device 230, the first electronic device 310 may reduce power consumption (or battery consumption) caused by the operation of identifying (or determining, obtaining, measuring) the channel state information based on the signal transmitted (or broadcast) by the third electronic device 230.

After the first message is transmitted to the second electronic device 220 (or after a response message corresponding to the first message is received from the second electronic device 220), the first electronic device 210 may switch the communication circuit 310 to an idle or inactive state.

Alternatively, after the first message is transmitted to the second electronic device 220 (or after a response message corresponding to the first message is received from the second electronic device 220), the first electronic device 210 may switch the communication circuit 310 to an idle or inactive state during a designated time period.

The switching of the communication circuit 310 to an idle or inactive state may be implemented in various ways. According to an example, the processor 310 may switch the communication circuit 310 to an idle or inactive state by controlling the communication circuit 310 to enter a power saving mode. According to another example, when the communication circuit 310 supports a target wake time (TWT), the first electronic device 210 may switch the communication circuit 310 to the idle or inactive state by configuring a parameter associated with a time at which the communication circuit 310 is to be inactive (or a time at which the communication circuit 310 is to be active) and transmitting the parameter to the second electronic device 220.

The first electronic device 210 may receive a second message from the second electronic device 220 indicating that a condition associated with the channel state information is satisfied, in operation 1120.

The first electronic device 210 may receive, from the second electronic device 220, a second message including information indicating that the channel state information of the signal transmitted by the third electronic device 230 satisfies the condition (included in the first message), the channel state information being measured by the second electronic device 220.

In operation 1130, the first electronic device 210 may activate and/or perform a service using the first electronic device 210 and/or the third electronic device 230.

In response to receiving the second message (or upon receiving the second message), the first electronic device 210 may activate and/or perform a service using the first electronic device 210 and/or the third electronic device 230. A service may refer to a service that can be performed using at least one of the first electronic device 210 and/or the third electronic device 230. According to an example, mutually associated services may include a service for controlling a screen displayed on a display of the first electronic device 210 to be displayed on a display of the third electronic device 230 (e.g., a screen mirroring service), a service for splitting and displaying content on the display of the first electronic device 210 and the display of the third electronic device 230 (e.g., a screen sharing service), or a service for controlling the first electronic device 210 using a user input to the third electronic device 230, and may include various services in addition to the examples described above.

According to an example, the second message may include channel state information measured by the second electronic device 220. The first electronic device 210 may activate and/or perform a service based on the channel state information included in the second message.

A first electronic device (e.g., the first electronic device 210 of FIG. 3) according to an example may include a communication circuit (e.g., the communication circuit 310 of FIG. 3) for performing short-range wireless communication. The first electronic device 210 may include a memory (e.g., the memory 330 of FIG. 3). The first electronic device 210 may include at least one processor (e.g., the at least one processor 320 of FIG. 3). The memory 330 may store instructions that, when executed by the at least one processor 320, cause the first electronic device to transmit a first message to a second electronic device (e.g., the second electronic device 220 of FIG. 4) connected to the first electronic device 210, wherein the first message includes identification information of a third electronic device (e.g., the third electronic device 230 of FIG. 2) connected to the second electronic device 220, a condition associated with channel state information (CSI) measured based on a signal transmitted by the third electronic device 230, and/or a value associated with the condition, the first message requesting the second electronic device 220 to determine whether the signal satisfies the condition. The memory 330 may store instructions for receiving, from the second electronic device 220, a second message including information indicating that the signal satisfies the condition associated with the channel state information. The memory 330 may store instructions for, when the second message is received, activating and/or performing a service using the first electronic device 210 and the third electronic device 230.

In the first electronic device 210 according to an example, the second message may include information related to the signal transmitted by the third electronic device 230. The memory 330 may further store instructions for activating and/or performing the service, based on information related to the signal included in the second message.

In the first electronic device 210 according to an example, the memory 330 may further store instructions for switching the communication circuit 310 to an inactive state after the first message is transmitted to the second electronic device 220.

In the first electronic device 210 according to an example, the memory 330 may further store instructions that, after the first message is transmitted to the second electronic device 220, control the communication circuit 310 to be active during a designated time period and to be inactive during a different time period.

In the first electronic device 210 according to an example, the memory 330 may further store instructions for transmitting, to the second electronic device 220, a third message for requesting termination of the determination by the second electronic device 220 of whether the signal satisfies the condition.

In the first electronic device 210 according to an example, the memory 330 may further store instructions for transmitting the third message to the second electronic device 220, based on identification that the service is a designated service. The memory 330 may further store instructions for, based on a signal transmitted by the third electronic device 230 during performing of the service, identifying the channel state information of the signal received from third electronic device 230.

In the first electronic device 210 according to an example, the designated service may include a service requiring low latency.

In the first electronic device 210 according to an example, the condition associated with the channel state information may include at least one of a condition in which the channel state information measured based on the signal transmitted by the third electronic device 230 is similar to the value associated with the condition by a designated size or more, and/or a condition in which the channel state information measured based on the signal transmitted by the third electronic device 230 is dissimilar to the value associated with the condition by a designated size or more.

In the first electronic device 210 according to an example, the value associated with the condition may include channel state information measured based on a signal transmitted by the second electronic device 220 to the first electronic device 210.

A second electronic device (e.g., the second electronic device 220 of FIG. 4) according to an example may include a communication circuit (e.g., the communication circuit 410 of FIG. 4) for performing short-range wireless communication. The second electronic device 220 may include a memory (e.g., the memory 430 of FIG. 4). The second electronic device 220 may include at least one processor (e.g., the processor 420 of FIG. 4). The memory 430 may store instructions that, when executed by the at least one processor 420, cause the second electronic device 220 to receive a first message from a first electronic device (e.g., the first electronic device 210 of FIG. 3) to which the second electronic device 220 is connected, wherein the first message includes identification information of a third electronic device (e.g., the third electronic device 210 of FIG. 3) connected to the second electronic device 220, a condition associated with channel state information (CSI) measured based on a signal transmitted by the third electronic device 230, and/or a value associated with the condition, the first message requesting the second electronic device 220 to determine whether the signal satisfies the condition. The memory 430 may store instructions for, when the channel state information measured based on the signal received from the third electronic device 230 satisfies the condition, transmitting, to the first electronic device 210, a second message including information indicating that a condition associated with the channel state information is satisfied.

In the second electronic device 220, the second message may include information related to the signal transmitted by the third electronic device 230.

The second electronic device 220 may further store instructions for transmitting the second message during a time in which the short-range wireless communication function of the first electronic device 210 remains in an active state.

In the second electronic device 220, the memory 430 may further store instructions for receiving a third message for requesting termination of the determination by the second electronic device 220 of whether the signal satisfies the condition. The memory 430 may further store instructions for, based on reception of the third message, terminating an identification of whether the channel state information measured based on the signal received from the third electronic device 230 satisfies the condition.

In the second electronic device 220, the condition associated with the channel state may include at least one of a condition in which the channel state information measured based on the signal transmitted by the third electronic device 230 is similar to the value associated with the condition by a designated size or more, and/or a condition in which the channel state information measured based on the signal transmitted by the third electronic device 230 is dissimilar to the value associated with the condition by a designated size or more.

In the second electronic device 220 according to an example, the value associated with the condition may include channel state information measured based on a signal transmitted by the second electronic device 220 to the first electronic device 210.

An operation method of a first electronic device (e.g., the first electronic device 210 of FIG. 3) may include transmitting a first message to a second electronic device (e.g., the second electronic device 220 of FIG. 4) connected to the first electronic device 210, wherein the first message includes identification information of a third electronic device (e.g., the third electronic device 230 of FIG. 2) connected to the second electronic device, a condition associated with channel state information (CSI) measured based on a signal transmitted by the third electronic device 230, and/or a value associated with the condition, the first message requesting the second electronic device 220 to determine whether the signal satisfies a condition. The operation method of the first electronic device 210 may include receiving, from the second electronic device 220, a second message including information indicating that the condition associated with the channel state information is satisfied. The operation method of the first electronic device 210 may include, when the second message is received, activating and/or performing a service using the first electronic device 210 and the third electronic device 230.

In the operation method of the first electronic device 210, the second message may include information related to the signal transmitted by the third electronic device 230. The activating and/or performing of the service using the electronic device and the third electronic device 230 may include activating and/or performing the service, based on information related to the signal included in the second message.

The operation method of the first electronic device 210 may further include, after the first message is transmitted to the second electronic device 220, switching the communication circuit 310 to an inactive state.

The operation method of the first electronic device 210 may further include transmitting, to the second electronic device 220, a third message requesting termination of the determination by the second electronic device 220 of whether the signal satisfies a condition.

The operation method of the first electronic device 210 may further include, based on identifying that the service is a designated service, transmitting the third message to the second electronic device 220. The operation method of the first electronic device 210 may further include, based on the signal received from the third electronic device 230 during performing of the service, identifying channel state information of the signal received from the third electronic device 230.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (210) comprising:
a communication circuit (310) configured to perform short-range wireless communication;
a memory (330) storing instructions; and
at least one processor (320),
wherein the instructions that, when executed by the at least one processor (320), cause the first electronic device (210) to:
transmit, to a second electronic device (220) connected to the first electronic device (210), a first message including identification information of a third electronic device (230) connected to the second electronic device (220), a condition associated with channel state information (CSI) measured based on a signal transmitted by the third electronic device (230), and/or a value associated with the condition, the first message requesting the second electronic device (220) to determine whether the signal satisfies the condition;
receive, from the second electronic device (220), a second message including information indicating that the signal satisfies the condition associated with the channel state information; and
based on receiving the second message, activate and/or perform a service using the first electronic device (210) and the third electronic device (230).

2. The first electronic device (210) of claim 1, wherein the second message comprises information related to the signal transmitted by the third electronic device (230), and
wherein the instructions, when executed by the at least one processor (320) cause the first electronic device (210) to activate and/or perform the service, based on the information related to the signal, included in the second message.

3. The first electronic device (210) of claim 1, wherein the instructions, when executed by the at least one processor (320) cause the first electronic device (210) to switch the communication circuit (310) to a deactivated state after the first message is transmitted to the second electronic device (220).

4. The first electronic device (210) of claim 1, wherein the instructions, when executed by the at least one processor (320) cause the first electronic device (210) to control the communication circuit (310) to be activated during a designated time period and deactivated during a different time period after the first message is transmitted to the second electronic device (220).

5. The first electronic device (210) of claim 1, wherein the instructions, when executed by the at least one processor (320) cause the first electronic device (210) to transmit, to the second electronic device (220), a third message requesting the second electronic device (220) to terminate the determining of whether the signal satisfies the condition.

6. The first electronic device (210) of claim 5, wherein the instructions, when executed by the at least one processor (320) cause the first electronic device (210) to:
transmit the third message to the second electronic device (220), based on identification that the service is a designated service; and
based on a signal transmitted by the third electronic device (230) during performing of the service, identify the channel state information of the signal received from third electronic device (230).

7. The first electronic device (210) of claim 6, wherein the designated service comprises a service requiring low latency.

8. The first electronic device (210) of claim 1, wherein the condition associated with the channel state information comprises at least one of a condition in which the channel state information measured based on the signal transmitted by the third electronic device (230) is similar to the value associated with the condition by a designated size or greater, and/or a condition in which the channel state information measured based on the signal transmitted by the third electronic device (230) is dissimilar to the value associated with the condition by a designated size or greater.

9. The first electronic device (210) of claim 1, wherein the value associated with the condition comprises channel state information measured based on a signal transmitted by the second electronic device (220) to the first electronic device (210).

10. A second electronic device (220) comprising:
a communication circuit (410) configured to perform short-range wireless communication;
a memory (430) storing instructions; and
at least one processor (420),
wherein the instructions that, when executed by the at least one processor (420), cause the second electronic device (220) to:
receive, from a first electronic device (210) to which the second electronic device (220) is connected, a first message including identification information of a third electronic device (230) connected to the second electronic device (220), a condition associated with channel state information (CSI) measured based on a signal transmitted by the third electronic device (230), and/or a value associated with the condition, the first message requesting the second electronic device (220) to perform determining whether the signal satisfies the condition; and
in the case that the channel state information measured based on the signal received from the third electronic device (230) satisfies the condition, transmit, to the first electronic device (210), a second message including information indicating that the condition associated with the channel state information is satisfied.

11. The second electronic device (220) of claim 10, wherein the second message comprises information related to the signal transmitted by the third electronic device (230).

12. The second electronic device (220) of claim 10, wherein the instructions that, when executed by the at least one processor (420), cause the second electronic device (220) to transmit the second message during a time period in which the short-range wireless communication function of the first electronic device (210) remains in an activated state.

13. The second electronic device (220) of claim 10, wherein the instructions that, when executed by the at least one processor (420), cause the second electronic device (220) to:
receive a third message requesting the second electronic device (220) to terminate the determining of whether the signal satisfies the condition; and
based on reception of the third message, terminate identification of whether the channel state information measured based on the signal received from the third electronic device (230) satisfies the condition.

14. The second electronic device (220) of claim 10, wherein the condition associated with the channel state comprises at least one of a condition in which the channel state information measured based on the signal transmitted by the third electronic device (230) is similar to the value associated with the condition by a designated size or greater, and/or a condition in which the channel state information measured based on the signal transmitted by the third electronic device (230) is dissimilar to the value associated with the condition by a designated size or greater.

15. The second electronic device (220) of claim 10, wherein the value associated with the condition comprises channel state information measured based on a signal transmitted by the second electronic device (220) to the first electronic device (210).
